(19) Europäisches Patentamt
European Patent Office
Office européen des brevets

(11) **EP 3 903 903 A1**

(12) **EUROPEAN PATENT APPLICATION**
published in accordance with Art. 153(4) EPC

(43) Date of publication:
**03.11.2021 Bulletin 2021/44**

(51) Int Cl.:
***B01D 39/16*** *(2006.01)*  ***B01D 63/14*** *(2006.01)*
***B01D 69/00*** *(2006.01)*  ***B01D 69/10*** *(2006.01)*
***B01D 69/12*** *(2006.01)*  ***B01D 71/36*** *(2006.01)*

(21) Application number: **19902497.7**

(22) Date of filing: **23.12.2019**

(86) International application number:
**PCT/JP2019/050445**

(87) International publication number:
**WO 2020/138010 (02.07.2020 Gazette 2020/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.12.2018 JP 2018248632**

(71) Applicant: **NITTO DENKO CORPORATION
Ibaraki-shi
Osaka 567-8680 (JP)**

(72) Inventor: **UCHIYAMA Shiho
Ibaraki-shi, Osaka 567-8680 (JP)**

(74) Representative: **Müller-Boré & Partner
Patentanwälte PartG mbB
Friedenheimer Brücke 21
80639 München (DE)**

(54) **FILTER PLEAT PACK AND AIR FILTER UNIT**

(57)     A filter pleat pack of the present disclosure includes an air filter medium folded into pleats, wherein the air filter medium includes a laminate of a polytetrafluoroethylene (PTFE) porous membrane and an air-permeable supporting member, and the air filter medium has a shrinkage rate of 50% or more, the shrinkage rate being determined by a formula $(d2 - d1)/d2$, where $d1$ is a smallest thickness of the PTFE porous membrane in a folding area of the air filter medium folded into pleats and $d2$ is a thickness of the PTFE porous membrane in a flat area of the air filter medium. The filter pleat pack of the present disclosure is a filter pleat pack for which a collection efficiency decrease resulting from pleating is reduced.

FIG.1B

**Description**

TECHNICAL FIELD

The present invention relates to a filter pleat pack including an air filter medium folded into pleats and an air filter unit including the filter pleat pack.

BACKGROUND ART

Air filter mediums, particularly filter mediums included in air filters for clean rooms used in, for example, the semiconductor industry and the pharmaceutical industry, include a filter medium including a polytetrafluoroethylene (hereinafter referred to as "PTFE") porous membrane. An air filter medium including a PTFE porous membrane has advantages such as a lower amount of dust produced from the air filter medium itself and higher chemical resistance than those of a filter medium including glass fibers. Moreover, in the form of an ultra-low penetration air grade (ULPA) filter, an air filter medium including a PTFE porous membrane can achieve a low pressure loss which is about two-thirds to one-half of the pressure loss of a filter medium including glass fibers and having the same collection efficiency. Patent Literature 1 discloses an air filter medium including a PTFE porous membrane and a method for manufacturing the air filter medium.

CITATION LIST

Patent Literature

Patent Literature 1: JP 2001-170461 A

SUMMARY OF INVENTION

Technical Problem

PTFE porous membranes in air filter mediums are commonly stacked on a supporting member having air permeability (hereinafter referred to as "air-permeable supporting member") in order to reinforce the membranes to maintain the shapes as filter mediums. Additionally, in order to ensure as large a filtration area as possible, air filter mediums are generally folded into pleats by pleating so as to have a series of W-shapes when viewed from the side. Further, a pleated air filter medium is integrated with a frame to serve as an air filter unit. Pleated air filter mediums are commonly called "filter pleat packs" by persons skilled in the art.

PTFE porous membranes are very thin membranes. Hence, even when a PTFE porous membrane is stacked on an air-permeable supporting member, the PTFE porous membrane may suffer a small defect caused by stress applied to the membrane at pleating. A defect in the PTFE porous membrane decreases the collection efficiency as a filter pleat pack and that as an air filter unit including the filter pleat pack. Patent Literature 1 does not mention to these phenomena nor solutions to them.

The present invention aims to provide a filter pleat pack including an air filter medium including a PTFE porous membrane, the filter pleat pack for which a collection efficiency decrease resulting from pleating is reduced.

Solution to Problem

Through a lot of trial and error, the present inventors have finally succeeded in obtaining a PTFE porous membrane highly responsive to stress applied thereto at pleating and have completed the present invention.

The present invention provides a filter pleat pack including an air filter medium folded into pleats, wherein

the air filter medium includes a laminate of a polytetrafluoroethylene (PTFE) porous membrane and an air-permeable supporting member, and
the air filter medium has a shrinkage rate of 50% or more, the shrinkage rate being determined by a formula $(d2 - d1)/d2$, where $d1$ is a smallest thickness of the PTFE porous membrane in a folding area of the air filter medium folded into pleats and $d2$ is a thickness of the PTFE porous membrane in a flat area of the air filter medium.

In another aspect, the present invention provides an air filter unit including:

the above filter pleat pack of the present invention; and

a frame supporting the filter pleat pack.

Advantageous Effects of Invention

In the filter pleat pack of the present invention, the air filter medium has as high a shrinkage rate as 50% or more, the shrinkage rate being determined by the formula $(d2 - d1)/d2$ from the smallest thickness d1 of the PTFE porous membrane in a folding area of the air filter medium folded into pleats and the thickness d2 of the PTFE porous membrane in a flat area (an area other than the folding area) of the air filter medium. The above high shrinkage rate indicates that the air filter medium included in the filter pleat pack of the present invention includes a PTFE porous membrane highly responsive to stress applied thereto at pleating. Therefore, a filter pleat pack that includes an air filter medium including a PTFE porous membrane and for which a collection efficiency decrease resulting from pleating is reduced is achieved according to the present invention.

BRIEF DESCRIPTION OF DRAWINGS

FIG. 1A is a plan view schematically showing an example of a filter pleat pack of the present invention.
FIG. 1B is a cross-sectional view showing an area I on a cross-section B-B of the filter pleat pack shown in FIG. 1A.
FIG. 2 is a schematic view for illustrating a folding area and a flat area of an air filter medium.
FIG. 3 is a cross-sectional view schematically showing an example of an air filter medium included in the filter pleat pack of the present invention.
FIG. 4 is a perspective view schematically showing an example of an air filter unit of the present invention.
FIG. 5A shows a scanning electron microscope (hereinafter referred to as "SEM") image of a cross-section of a filter pleat pack of Example 3.
FIG. 5B shows a SEM image of a cross-section of the filter pleat pack of Example 3.
FIG. 5C shows an enlarged image of an area IV in the image shown in FIG. 5B.

DESCRIPTION OF EMBODIMENTS

Hereinafter, embodiments of the present invention will be described with reference to the drawings. The present invention is not limited to the following embodiments.

[Filter pleat pack]

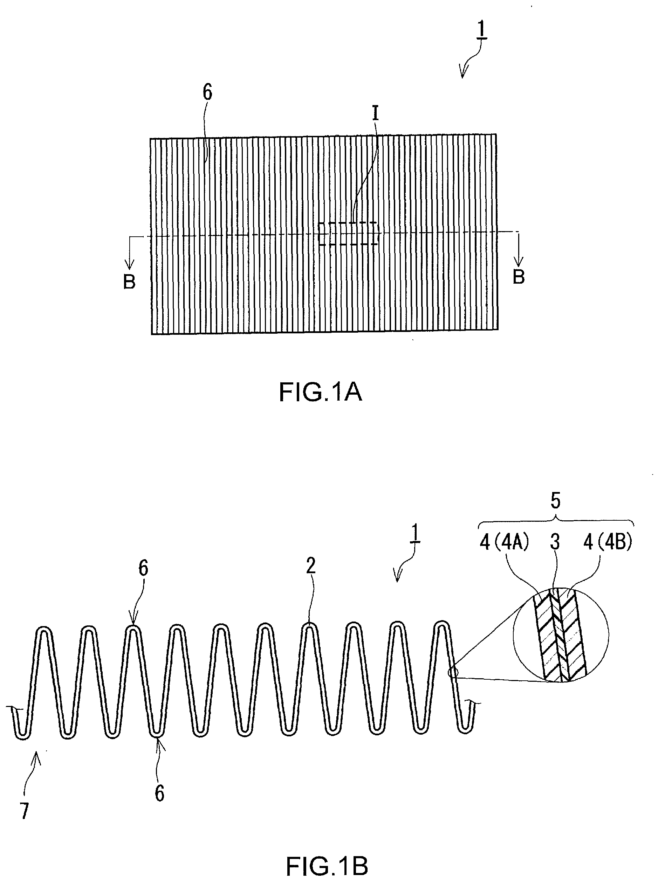

FIGS. 1A and 1B show an example of the filter pleat pack of the present invention. FIG. 1B is an enlarged view of an area I on a cross-section B-B shown in FIG. 1A. A filter pleat pack 1 of FIGS. 1A and 1B is formed of an air filter medium 2 folded into pleats. The air filter medium 2 includes a laminate 5 of a PTFE porous membrane 3 and air-permeable supporting members 4 (4A and 4B). The laminate 5 has a three-layer laminate structure in which the PTFE porous membrane 3 is sandwiched by the pair of air-permeable supporting members 4A and 4B. The PTFE porous membrane 3 and each of the air-permeable supporting members 4A and 4B are joined each other. In the air filter medium 2, the PTFE porous membrane 3 has a function of collecting a collection target included in gas to be filtered. The collection target is typically dust in air. The air-permeable supporting members 4A and 4B have a function of reinforcing the PTFE porous membrane 3 to maintain the shape as the air filter medium 2. Either of the air-permeable supporting members 4A and 4B can further have a function as a prefilter for collecting a relatively large collection target. Moreover, the air-permeable supporting members 4A and 4B impart resilience necessary for pleating to the air filter medium 2.

The cross-section shown in FIG. 1B is a cut surface 7 of the filter pleat pack 1, the cut surface 7 being taken along a plane perpendicularly crossing a pleat line 6. The pleat line 6 is a fold formed on the air filter medium 2 by pleating. The pleat line 6 is observed as a mountain fold or a valley fold when the filter pleat pack 1 is observed from one of its surfaces.

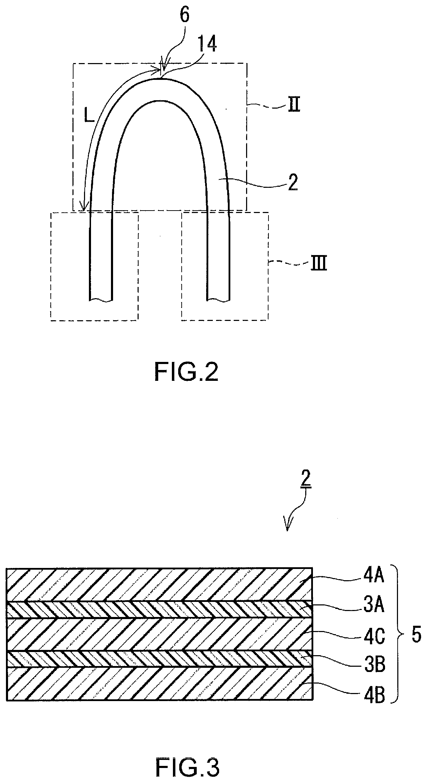

In the filter pleat pack 1, the air filter medium 2 has a shrinkage rate of 50% or more, the shrinkage rate being determined by a formula $(d2 - d1)/d2$ from the smallest thickness d1 of the PTFE porous membrane 3 in a folding area of the air filter medium 2 folded into pleats and the thickness d2 of the PTFE porous membrane 3 in a flat area of the air filter medium 2. The shrinkage rate may be 55% or more, 60% or more, 70% or more, 80% or more, 85% or more, or even 90% or more. The upper limit of the shrinkage rate is, for example, less than 100% or even 98% or less. A folding area II is herein defined as an area located within a length L of 1.5 mm, the length L extending along the air filter medium 2 from a peak 14 of a folded portion of the air filter medium 2 (refer to FIG. 2). The area located within a length L of 1.5 mm coincides with an area where the air filter medium 2 is particularly strongly affected by folding at pleating. Therefore, a high shrinkage rate indicates that the PTFE porous membrane 3 is flexible enough to be highly responsive to stress. A flat area III is herein defined as an area of the air filter medium 2, the area being other than the folding area II.

The thickness d1 of the PTFE porous membrane 3 is, for example, 1 $\mu$m or more. In this case, the filter pleat pack 1 can have adequate properties. The thickness d1 may be 1.5 $\mu$m or more, 2.0 $\mu$m or more, 2.5 $\mu$m or more, or even 3.0 $\mu$m or more. The upper limit of the thickness d1 is, for example, 5.0 $\mu$m or less.

The thickness d2 of the PTFE porous membrane 3 is, for example, more than 5 $\mu$m and may be 6.0 $\mu$m or more, 7.0 $\mu$m or more, 8.0 $\mu$m or more, 9.0 $\mu$m or more, or even 10.0 $\mu$m or more. The upper limit of the thickness d2 of the PTFE porous membrane 3 is, for example, 25.0 $\mu$m or less.

The thicknesses d1 and d2 of the PTFE porous membrane 3 in the filter pleat pack 1 can be evaluated, for example, in the following manner. First, the filter pleat pack 1 is embedded in an epoxy resin. Then, a cross-section including the PTFE porous membrane 3 is exposed, followed by polishing, surface treatment, and further ion polishing. The cross-section is commonly taken along a plane perpendicularly crossing the pleat line 6. Next, an enlarged image of the cross-section is obtained using a magnifying observation device such as a SEM. The enlarged image is, for example, at a magnification of about 100 to 2500 times. The enlarged image is subjected to image analysis, by which the smallest thickness d1 of the PTFE porous membrane 3 in the folding area II and the thickness d2 of the PTFE porous membrane 3 in the flat area III can be determined. The thickness d2 is the average of thicknesses determined at at least five different measurement points.

The mass per unit area of the air filter medium 2 is, for example, 30 to 260 g/m$^2$. The lower limit of the mass per unit area of the air filter medium 2 may be 40 g/m$^2$ or more, 50 g/m$^2$ or more, or even 55 g/m$^2$ or more. The upper limit of the mass per unit area of the air filter medium 2 may be 200 g/m$^2$ or less, 150 g/m$^2$ or less, 120 g/m$^2$ or less, 100 g/m$^2$ or less, 90 g/m$^2$ or less, 80 g/m$^2$ or less, or even 70 g/m$^2$ or less.

The air filter medium 2, for example, has the following properties.

A PF (performance factor) value of the air filter medium 2 is, for example, 23 or more, and may be 25 or more, 27 or more, or even 30 or more. The PF value is a measure of the filtration capability of the air filter medium. The air filter medium having a greater PF value has a higher filtration capability. The air filter medium 2 having a PF value of 23 or more can be used as a filter medium for air filters used in clean rooms in, for example, the semiconductor industry and the pharmaceutical industry.

The PF value of the air filter medium 2 can be determined by the following equation (1) from a pressure loss $PL_1$ (unit: mmH$_2$O) of the filer medium 2 measured at a permeate flow rate of 5.3 cm/sec (a permeated gas is air) and collection efficiency $CE_1$ (unit: %) of the filer medium 2 measured at a permeate flow rate of 5.3 cm/sec (a permeated gas is air) using polyalphaolefin particles having a particle diameter of 0.10 to 0.20 $\mu$m.

$$\text{PF value} = \{-\log[(100 - CE_1)/100]/PL_1\} \times 100 \quad (1)$$

The pressure loss $PL_1$ of the air filter medium 2 is, for example, 10 to 300 Pa, and may be 100 to 250 Pa or even 150 to 250 Pa.

The pressure loss $PL_1$ of the air filter medium 2 can be measured in the following manner. The air filter medium serving as an evaluation object is set in a holder having a vent hole (having a circular shape and an effective area of 100 cm$^2$) in such a manner that the filter medium blocks the vent hole. Then, a pressure difference is generated between one face and the other face of the holder so that air will permeate through the evaluation object in the vent hole. The pressure difference is measured using a pressure meter (manometer) at a moment when the linear flow velocity measured using a flowmeter for the air permeating through the evaluation object becomes 5.3 cm/sec. The pressure difference as defined above is measured eight times for one evaluation object, and the average of the measured values is employed as the pressure loss of the evaluation object.

The collection efficiency $CE_1$ of the air filter medium 2 is, for example, 20 to 100%, and may be 90 to 100% or even 99.9 to 100%. The lower limit of the collection efficiency $CE_1$ may be 99.9% or more, 99.99% or more, or even 99.999% or more. The air filter medium 2 may be a filter medium for a high-efficiency particulate air grade (HEPA) filter as specified in Japanese Industrial Standards (JIS) Z 8122: 2000 or may be a filter medium for an ultra-low penetration air grade (ULPA) filter.

The collection efficiency $CE_1$ of the air filter medium 2 can be measured in the following manner. The filter medium serving as an evaluation object is set in a holder having a vent hole (having a circular shape and an effective area of 100 cm$^2$) in such a manner that the filter medium blocks the vent hole. Then, a pressure difference is generated between one face and the other face of the holder so that air will permeate through the evaluation object in the vent hole. Next, the pressure difference is adjusted so that the linear flow velocity measured using a flowmeter for the air permeating through the evaluation object will be maintained at 5.3 cm/sec. After that, polyalphaolefin particles having a particle diameter of 0.10 to 0.20 $\mu$m (average particle diameter: 0.15 $\mu$m) are introduced into the air permeating through the evaluation object at a concentration of 4 $\times$ 10$^8$ particles/L or more. The concentration of the polyalphaolefin particles included in the air having permeated through the evaluation object is measured using a particle counter disposed downstream side of the evaluation object, and the collection efficiency of the evaluation object is determined by the following equation (2).

$$\text{Collection efficiency} = [1 - (\text{particle concentration on downstream side})/(\text{particle concentration on upstream side})] \times 100 \ (\%) \qquad (2)$$

The PTFE porous membrane 3 is commonly formed of a number of PTFE fibrils which are fine fibrous structures. The PTFE porous membrane 3 may further have a PTFE node connected to the fibril.

The PTFE porous membrane 3 can be obtained, for example, by shaping a mixture of an unsintered PTFE powder and a liquid lubricant into a sheet, for example, by extrusion and/or rolling, removing the liquid lubricant from the resulting unsintered sheet, and making the sheet porous by stretching. The stretching is typically biaxial stretching which is a combination of stretching of the PTFE sheet in the MD direction (longitudinal direction) and stretching of the PTFE sheet in the TD direction (width direction). In the biaxial stretching, it is preferable to perform the stretching in the MD direction first and then the stretching in the TD direction. The liquid lubricant is not limited as long as the liquid lubricant can wet the surface of the PTFE particles and be removed later. The liquid lubricant is, for example, a hydrocarbon oil such as naphtha, white oil, or liquid paraffin. A method adopted to obtain the PTFE porous membrane 3 highly responsive to stress can be, for example, a method for forming the PTFE porous membrane 3 being thick and having a good balance between strength in the MD direction and that in the TD direction by thinning the unsintered sheet to be stretched and keeping a low stretching ratio in the MD direction, thereby giving necessary strength to the membrane and preventing the PTFE particles from strongly binding to each other in the MD direction only, the method in which the PTFE is held in an atmosphere at less than its melting point (327°C) during stretching in the MD and TD directions. In this method, the thickness of the unsintered sheet to be stretched is, for example, 50 to 550 $\mu$m, and the upper limit of the thickness of the unsintered sheet to be stretched is preferably 500 $\mu$m or less, 400 $\mu$m or less, 300 $\mu$m or less, 200 $\mu$m or less, or even 100 $\mu$m or less. In this method, the stretching in the MD direction may be performed, for example, at a stretching ratio of 2 to 23 and a stretching temperature of 150 to 300°C. In the stretching in the MD direction, the stretching ratio is preferably 22 or less, 20 or less, 15 or less, 10 or less, or even 5 or less. In this method, the stretching in the TD direction may be performed, for example, at a stretching ratio of 10 to 60 and a stretching temperature of 40 to 190°C. In the stretching in the TD direction, the stretching temperature is preferably 170°C or less or even 150°C or less.

The porosity of the PTFE porous membrane 3 is, for example, 70 to 98%. Such a high porosity of the PTFE porous membrane 3 contributes to a low pressure loss and high collection efficiency of the air filter medium 2 including the PTFE porous membrane 3. The porosity can be measured in the following manner. The PTFE porous membrane to be measured is cut to given dimensions (for example, a 6-cm-diameter circle), and the volume and mass thereof are determined. The porosity of the PTFE porous membrane can be calculated by substituting the volume and mass into the following equation (3). In the equation (3), V (unit: cm$^3$) represents the volume, W (unit: g) represents the mass, and D (unit: g/cm$^3$) represents the true density of PTFE.

$$\text{Porosity} \ (\%) = 100 \times [V - (W/D)]/V \qquad (3)$$

The mass per unit area of the PTFE porous membrane 3 is, for example, 0.05 to 10 g/m$^3$, and may be 0.1 to 5 g/m$^3$ or 0.3 to 3 g/m$^3$.

The average pore diameter of the PTFE porous membrane 3 is, for example, 0.1 to 50 $\mu$m.

The PF value, pressure loss, and collection efficiency of the PTFE porous membrane 3 can be in the same ranges as those of the PF value, pressure loss, and collection efficiency described above for the air filter medium 2. The pressure loss and collection efficiency of the PTFE porous membrane 3 can be measured by the same methods as those for measurement of the pressure loss and collection efficiency of the air filter medium 2 using the PTFE porous membrane as an evaluation object.

The air-permeable supporting member 4 is a layer having a higher air permeability in the thickness direction than that of the PTFE porous membrane 2. The air-permeable supporting member 4 includes, for example, a non-woven fabric, woven fabric, or mesh formed of fibers such as short fibers or long fibers. The air-permeable supporting member 4 including the non-woven fabric is preferred because of its excellent air permeability, strength, flexibility, and workability.

Examples of the material that can form the air-permeable supporting member 4 include: polyolefins such as polyethylene (PE) and polypropylene (PP); polyesters such as polyethylene terephthalate (PET); polyamides including aromatic polyamides; and composite materials thereof. The air-permeable supporting member 4 may include two or more of these materials. The material is preferably a polyolefin and more preferably PE because, in that case, the air-permeable supporting member 4 relatively strongly joins to the PTFE porous membrane 3. When the material is a composite material of the above materials, a polyolefin, particularly PE, is preferably exposed to a surface of the air-permeable supporting member 4, the surface being joined to the PTFE porous membrane 3.

One example of the composite material that can form the air-permeable supporting member 4 is composite fibers having a core-sheath structure composed of a core and a sheath covering the core, the core and sheath being formed of different materials. For the composite fibers, the melting point of the material forming the sheath is preferably lower than the melting point of the material forming the core. The material forming the core is, for example, a polyester such as PET. The material forming the sheath is, for example, a polyolefin such as PE.

The average fiber diameter of the fibers that can form the air-permeable supporting member 4 is, for example, 1 to 50 $\mu$m, and may be 1 to 30 $\mu$m or 10 to 30 $\mu$m.

The mass per unit area of the air-permeable supporting member 3 is, for example, 20 to 70 g/m². The upper limit of the mass per unit area of the air-permeable supporting member 3 may be 50 g/m² or less, 40 g/m² or less, less than 40 g/m², or even 35 g/m² or less. The lower limit of the mass per unit area of the air-permeable supporting member 3 is, for example, 25 g/m² or more.

In the air filter medium 2, the PTFE porous membrane 3 and the air-permeable supporting member 4 are joined to each other. The joining method is, for example, but not limited to thermal lamination or lamination using an adhesive. The PTFE porous membrane 3 and the air-permeable supporting member 4 are preferably joined to each other by thermal lamination because, in that case, an increase in pressure loss at the joining interface can be reduced.

The air filter medium 2 shown in FIG. 1B is a filter medium including the laminate 5 having a three-layer structure composed of one PTFE porous membrane 3 and two air-permeable supporting members 4A and 4B sandwiching the PTFE porous membrane 3. However, the numbers of PTFE porous membranes 3 and air-permeable supporting members 4 included in the air filter medium 2 and the laminate 5 are not limited. The air filter medium 2 and the laminate 5 may include two or more PTFE porous membranes 3. The air filter medium 2 preferably includes the laminate 5 having a multilayer structure including three or more layers.

FIG. 3 shows another example of the air filter medium 2. The air filter medium 2 of FIG. 3 includes the laminate 5 having a five-layer structure composed of two PTFE porous membranes 3A and 3B and three air-permeable supporting members 4A, 4B, and 4C. In the air filter medium 2 of FIG. 3, the air-permeable supporting member 4A, the PTFE porous membrane 3A, the air-permeable supporting member 4C, the PTFE porous membrane 3B, and the air-permeable supporting member 4B are stacked in this order. In each of the air filter mediums 2 shown in FIGS. 1B and 3, the laminate 5 includes two or more air-permeable supporting members 4, and the principal surfaces (outermost layers) of the filter medium 2 are each formed of the air-permeable supporting member 4.

In the air filter medium 2 including two or more PTFE porous membranes 3, there may be a portion where the PTFE porous membranes 3 are contiguously stacked. The two or more PTFE porous membranes 3 may have the same configuration or different configurations from each other. Similarly, in the air filter medium 2 including two or more air-permeable supporting members 4, there may be a portion where the air-permeable supporting members 4 are contiguously stacked. The two or more air-permeable supporting members 4 may have the same configuration or different configurations from each other.

The air filter medium 2 and the laminate 5 may include a layer and/or member other than the PTFE porous membrane 3 and the air-permeable supporting member 4 as long as the effects of the present invention can be achieved.

The air filter medium 2 can be formed, for example, by stacking and joining the PTFE porous membrane 3 and the air-permeable supporting member 4 by any of various lamination techniques such as thermal lamination and adhesive lamination.

The filter pleat pack 1 has, for example, the following properties.

A PF (performance factor) value of the filter pleat pack 1 is, for example, 40 or more, 45 or more, 50 or more, 55 or more, or even 60 or more. The PF value is a measure of the filtration capability of the filter pleat pack. The filter pleat pack having a greater PF value has a higher filtration capability. The filter pleat pack 1 having a PF value of 40 or more can be preferably included in air filters used in clean rooms in, for example, the semiconductor industry and the pharmaceutical industry.

The PF value of the filter pleat pack 1 can be determined by the following equation (4) from a pressure loss $PL_2$ (unit: mmH$_2$O) and collection efficiency $CE_2$ (unit: %) of the filter pleat pack 1.

$$\text{PF value} = \{-\log[(100 - CE_2)/100]/PL_2\} \times 100 \quad (4)$$

The pressure loss $PL_2$ of the filter pleat pack 1 is, for example, 5 to 125 Pa, and may be 40 to 100 Pa or even 60 to 100 Pa.

The pressure loss $PL_2$ of the filter pleat pack 1 can be determined by combining the filter pleat pack 1 and a frame to form an air filter unit and subjecting the air filter unit to the pressure loss test of the test method type 1 specified in JIS B 9908: 2011. As the frame can be used, for example, an aluminum frame having outer dimensions of 610 mm × 610 mm and including an opening portion having dimensions of 580 mm × 580 mm.

The collection efficiency $CE_2$ of the filter pleat pack 1 is, for example, 99.9 to 99.9999%, and may be 99.9 to 99.99999% or even 99.9 to 99.999999%. The lower limit of the collection efficiency $CE_2$ may be 99.99% or more, 99.999% or more, or even 99.9999% or more. The filter pleat pack 1 may be for a HEPA filter or for an ULPA filter specified in JIS Z 8122: 2000.

The collection efficiency (overall collection efficiency) $CE_2$ of the filter pleat pack 1 can be determined by combining the filter pleat pack 1 and a frame to form an air filter unit and performing evaluation of the collection efficiency of the air filter unit according to the methods specified in European Norm (EN) 1822-1: 2009. As the frame can be used, for example, an aluminum frame having outer dimensions of 610 mm × 610 mm and including an opening portion having dimensions of 580 mm × 580 mm. The evaluation is performed according to the following measurement conditions and measurement method. Collection efficiency determined using polydisperse (particle diameter: 0.10 to 0.20 $\mu$m; average particle diameter: 0.15 $\mu$m) test particles is employed as the overall collection efficiency $CE_2$ of the filter pleat pack, instead of collection efficiency determined using particles having the most penetrating particle size (MPPS) specified in EN 1822-1: 2009.

- Test particles: polyalphaolefin (PAO)
- Test particle diameter: 0.1 $\mu$m or more
- Particle concentration on upstream side: $1.0 \times 10^8$ particles/L or more
- Face velocity: $0.4 \pm 0.1$ m/sec

For the filter pleat pack 1, a collection efficiency decrease resulting from pleating is reduced. Thus, the filter pleat pack 1 achieves a good balance between a low pressure loss $PL_2$ and high collection efficiency $CE_2$. This feature can be expressed by the PF value and the collection efficiency $CE_2$. The filter pleat pack 1 can have, for example, a PF value of 40 or more, preferably 45 or more, more preferably 50 or more, even more preferably 55 or more, and particularly preferably 60 or more and collection efficiency $CE_2$ of 99.9% or more, preferably 99.99% or more, more preferably 99.999% or more, and even more preferably 99.9999% or more at the same time.

The filter pleat pack 1 may further include a member other than the air filter medium 2. The member is, for example, a resin string generally called "bead." The bead is a kind of spacer for maintaining the shape of the pleated air filter medium. The bead is commonly disposed on a surface(s) of the folded air filter medium 2 to extend along a direction intersecting with the pleat line(s) 6 (a mountain fold and/or a valley fold) of the air filter medium 2. The bead may be disposed on one surface of the air filter medium 2 or may be disposed on both surfaces thereof. The bead is preferably disposed not on the PTFE porous membrane 3 but on the air-permeable supporting member 4. When a surface of the air filter medium 2, the surface where the bead is disposed, is viewed in plan, the filter pleat pack 1 may include a plurality of beads disposed in parallel to each other with a given space left between each other along the pleat line 6. The beads can be formed, for example, by melting a resin and applying the resin in a string form. The resin is not limited and is, for example, a polyamide or a polyolefin.

The filter pleat pack 1 can be formed by folding the air filter medium 2 into pleats by pleating. The air filter medium 2 is folded by pleating so as to have a series of W-shapes when viewed from the side.

The pleating of the air filter medium 2 is accomplished, for example, by using a reciprocating machine to uninterruptedly fold the air filter medium 2 along mountain and valley folds alternately arranged in parallel on a surface of the air filter medium 2.

[Air filter unit]

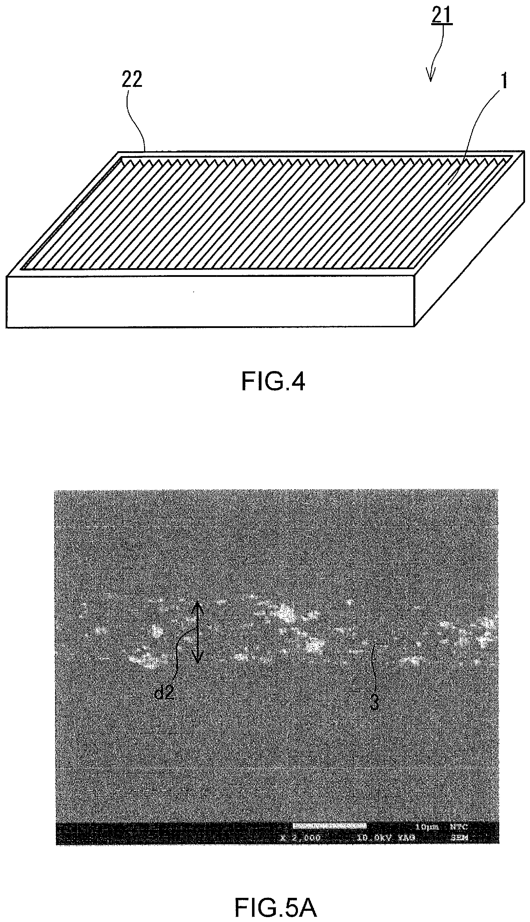

FIG. 4 shows an example of the air filter unit of the present invention. An air filter unit 21 shown in FIG. 4 includes the filter pleat pack 1 and a frame 22 supporting the filter pleat pack 1. In the air filter unit 21, a peripheral portion of the filter pleat pack 1 is supported by the frame (support frame) 22. The frame 22 is formed of, for example, a metal, a resin, or a composite material thereof. When the frame 22 is formed of a resin, the filter pleat pack 1 can be fixed to the frame 22 at the same time as formation of the frame 22. The configuration of the frame 22 can be the same as that of a frame included in conventional air filter units.

For the air filter unit 21 including the filter pleat pack 1, a collection efficiency decrease resulting from pleating for formation of the filter pleat pack 1 is reduced. The PF value, pressure loss, and collection efficiency (overall collection efficiency) of the air filter unit 21 can be within the above numerical ranges, including the preferred ranges, described for the filter pleat pack 1.

EXAMPLES

Hereinafter, the present invention will be described in more detail by way of examples. The present invention is not limited to the following examples.

First, methods for evaluating PTFE porous membranes, air filter mediums, and filter pleat packs produced in Examples and Comparative Example will be described hereinafter.

[Thickness]

The thicknesses of air-permeable supporting members, the PTFE porous membranes yet to be stacked on the air-permeable supporting members, and the air filter mediums were evaluated using a digital dial gauge. Additionally, the thicknesses of the PTFE porous membranes in the filter pleat packs were evaluated in the following manner. First, each filter pleat pack was embedded in an epoxy resin. Then, a cross-section including the PTFE porous membrane was exposed, followed by polishing, surface treatment, and further ion polishing. The cross-section was taken along a plane perpendicularly crossing a pleat line of the filter pleat pack. Next, an enlarged image (at a magnification of 500 to 2000 times) of the cross-section, the enlarged image being obtained using a field emission SEM (FE-SEM; JSM-7500F manufactured by JEOL Ltd.; accelerating voltage: 5 kV; backscattered electron image), was subjected to image analysis to determine the smallest thickness d1 of the PTFE porous membrane in the folding area II and the thickness d2 of the PTFE porous membrane in the flat area III. The thickness d2 is the average of thicknesses determined at five different measurement points.

[Collection efficiency of air filter medium]

Collection efficiency of the air filter medium produced in each of Examples and Comparative Example was measured in the following manner. First, the air filter medium serving as an evaluation object was set in a holder having a vent hole (having a circular shape and an effective area of 100 cm$^2$) in such a manner that the evaluation object blocked the vent hole. Then, a pressure difference was generated between one face and the other face of the holder so that air would permeate through the evaluation object in the vent hole. Next, the pressure difference was adjusted so that the linear flow velocity measured using a flowmeter for the air permeating through the evaluation object would be maintained at 5.3 cm/sec. After that, polyalphaolefin particles having a particle diameter of 0.10 to 0.20 $\mu$m (average particle diameter: 0.15 $\mu$m) were introduced into the air permeating through the evaluation object at a concentration of $4 \times 10^8$ particles/L or more. The concentration of the polyalphaolefin particles included in the air having permeated through the evaluation object was measured using a particle counter disposed downstream of the evaluation object, and the collection efficiency of the evaluation object was determined by the following equation (2).

$$\text{Collection efficiency} = [1 - (\text{particle concentration on downstream side})/(\text{particle concentration on upstream side})] \times 100\ (\%) \qquad (2)$$

[Pressure loss of air filter medium]

A pressure loss of the air filter medium produced in each of Examples and Comparative Example was measured in the following manner. First, the air filter medium serving as an evaluation object was set in a holder having a vent hole (having a circular shape and an effective area of 100 cm$^2$) in such a manner that the evaluation object blocked the vent hole. Then, a pressure difference was generated between one face and the other face of the holder so that air would permeate through the evaluation object in the vent hole. The pressure difference was measured using a pressure meter (manometer) at a moment when the linear flow velocity measured using a flowmeter for the air permeating through the evaluation object became 5.3 cm/sec. The pressure difference as defined above was measured eight times for one evaluation object, and the average of the measured values was employed as the pressure loss of the evaluation object.

[PF value of air filter medium]

A PF value of the air filter medium produced in each of Examples and Comparative Example was determined by the following equation (1) from its collection efficiency ($CE_1$) and pressure loss ($PL_1$) as determined above. A pressure loss ($PL_1$) value substituted into the equation (1) was obtained by converting the $PL_1$ value in Pa to a $PL_1$ value in mmH$_2$O.

$$\text{PF value} = \{-\log[(100 - CE_1)/100]/PL_1\} \times 100 \qquad (1)$$

[Collection efficiency (overall collection efficiency) of filter pleat pack]

Overall collection efficiency of the filter pleat pack obtained by pleating of the air filter medium produced in each of Examples and Comparative Example was evaluated according to the methods specified in EN 1822-1: 2009 as overall collection efficiency of an air filter unit including the pleat pack integrated with a frame. The evaluation was performed according to the following measurement conditions and measurement method. Collection efficiency determined using polydisperse (particle diameter: 0.10 to 0.20 $\mu$m; average particle diameter: 0.15 $\mu$m) test particles was employed as the overall collection efficiency of the filter pleat pack, instead of collection efficiency determined using particles having the most penetrating particle size (MPPS) specified in EN 1822-1: 2009.

- Test particles: polyalphaolefin (PAO)
- Test particle diameter: 0.1 $\mu$m or more
- Particle concentration on upstream side: $1.0 \times 10^8$ particles/L or more
- Face velocity: $0.4 \pm 0.1$ m/sec
- Size of air filter unit: outer dimensions: 610 mm $\times$ 610 mm; dimensions of opening portion: 580 mm $\times$ 580 mm

Following the methods as specified in EN 1822-1: 2009, the total number of PAO particles leaking to the downstream side was measured across the entire area of the air filter unit by scanning the air filter unit surface on the downstream side with a probe having a 50 mm $\times$ 10 mm opening portion for measurement at 22 m/sec. Next, the particle concentration on the downstream side was determined from the measured total number of PAO particles. The collection efficiency of the air filter unit (filter pleat pack) was determined by the following equation from the determined particle concentration on the downstream side and the above particle concentration on the upstream side: overall collection efficiency = [1 - (particle concentration on downstream side/particle concentration on upstream side)] $\times$ 100 (%).

[Pressure loss of filter pleat pack]

A pressure loss of the filter pleat pack obtained by pleating of the air filter medium produced in each of Examples and Comparative Example was evaluated by performing the pressure loss test of the test method type 1 specified in JIS B 9908: 2011 as a pressure loss of the air filter unit including the pleat pack integrated with a frame. The frame used was one having outer dimensions of 610 mm $\times$ 610 mm and including an opening portion having dimensions of 580 mm $\times$ 580 mm.

[PF value of filter pleat pack]

A PF value of the filter pleat pack produced in each of Examples and Comparative Example was determined by the following equation (4) from the collection efficiency ($CE_2$) and pressure loss ($PL_2$) determined as described above. A pressure loss ($PL_2$) value substituted into the equation (4) was obtained by converting the $PL_2$ value in Pa to a $PL_2$ value in mmH$_2$O.

$$\text{PF value} = \{-\log[(100 - CE_2)/100]/PL_2\} \times 100 \quad (4)$$

(Example 1)

100 parts by weight of a PTFE fine powder (POLYFLON F-104 manufactured by DAIKIN INDUSTRIES, LTD.) and 20 parts by weight of dodecane serving as a liquid lubricant were uniformly mixed to obtain a mixture. Next, the mixture was extruded into a sheet shape using an extruder to obtain a strip-shaped PTFE sheet (thickness: 1.5 mm; width: 20 cm). Then, the PTFE sheet was rolled using a pair of metal pressure rolls. During the rolling, the PTFE sheet was pulled in the longitudinal direction by another roll disposed downstream of the pressure rolls so that the width of the PTFE sheet would be the same before and after the rolling. The rolled PTFE sheet had a thickness of 500 $\mu$m.
Next, the PTFE sheet was held in an atmosphere at 150°C to remove the liquid lubricant. Then, the PTFE sheet was stretched in the longitudinal direction at a stretching temperature of 280°C and a stretching ratio of 22 by roll stretching and was then stretched in the width direction at a stretching temperature of 150°C and a stretching ratio of 40 by tenter stretching. Furthermore, the stretched PTFE sheet was heated by hot air at 500°C with the dimensions of the stretched PTFE sheet fixed. A PTFE porous membrane A was thus obtained. The PTFE porous membrane A had a thickness of 6.5 $\mu$m.
Next, the PTFE porous membrane A and a pair of air-permeable supporting members formed of a non-woven fabric (ELEVES S0303WDO manufactured by UNITIKA LTD.; mass per unit area: 30 g/m$^2$; thickness: 210 $\mu$m) made

of PET/PE composite fibers were laminated by thermal lamination in such a manner that the pair of air-permeable supporting members sandwiched the PTFE porous membrane A. An air filter medium A having a three-layer structure composed of "air-permeable supporting member/PTFE porous membrane A/air-permeable supporting member" was thus obtained. The thickness of the air filter medium A was 320 μm, the pressure loss thereof was 220 Pa, the collection efficiency thereof was 99.9995%, and the PF value thereof was 24.

Next, the air filter medium A was pleated at a mountain height (pleat height) of 35 mm and a pleat-to-pleat distance of 8 ppi (pleats per inch) using a reciprocating pleating machine (manufactured by FALTEC) to obtain a filter pleat pack A. A polyamide resin was used as a bead for maintaining the shape of the filter pleat pack. The PTFE porous membrane A in the filter pleat pack A had a thickness d1 of 3.0 μm and a thickness d2 of 7.0 μm, and the air filter medium had a shrinkage rate of 57%.

Next, the filter pleat pack A obtained by pleating was fixed to an aluminum frame having outer dimensions of 610 mm × 610 mm and including an opening portion having dimensions of 580 mm × 580 mm using an adhesive in such a manner that the four sides of the filter pleat pack was in close contact with the frame. An air filter unit was thus obtained. The overall collection efficiency of the air filter unit (the overall collection efficiency of the filter pleat pack A) was 99.9998% (5N8). The pressure loss of the filter pleat pack A was 100 Pa and the PF value thereof was 55.

(Example 2)

A PTFE porous membrane B was obtained in the same manner as in Example 1, except that the rolling was performed to obtain a rolled PTFE sheet having a thickness of 200 μm and the stretching ratio in the longitudinal direction was 10. The thickness of the PTFE porous membrane B was 10 μm.

Next, an air filter medium B having a three-layer structure composed of "air-permeable supporting member/PTFE porous membrane B/air-permeable supporting member" was obtained in the same manner as in Example 1, except that the PTFE porous membrane B was used instead of the PTFE porous membrane A. The thickness of the air filter medium B was 320 μm, the pressure loss thereof was 220 Pa, the collection efficiency thereof was 99.9995%, and the PF value thereof was 24.

Next, a filter pleat pack B was obtained in the same manner as in Example 1, except that the air filter medium B was used instead of the air filter medium A. The PTFE porous membrane B in the filter pleat pack B had a thickness d1 of 1.0 μm and a thickness d2 of 6.7 μm, and the air filter medium had a shrinkage rate of 85%.

Next, the filter pleat pack B obtained by pleating was fixed to an aluminum frame having outer dimensions of 610 mm × 610 mm and including an opening portion having dimensions of 580 mm × 580 mm using an adhesive in such a manner that the four sides of the filter pleat pack was in close contact with the frame. An air filter unit was thus obtained. The overall collection efficiency of the air filter unit (the overall collection efficiency of the filter pleat pack B) was 99.99993% (6N3). The pressure loss of the filter pleat pack B was 100 Pa and the PF value thereof was 60.

(Example 3)

A PTFE porous membrane C was obtained in the same manner as in Example 1, except that the rolling was performed to obtain a rolled PTFE sheet having a thickness of 100 μm and the stretching ratio in the longitudinal direction was 5. The thickness of the PTFE porous membrane C was 12.5 μm.

Next, an air filter medium C having a three-layer structure composed of "air-permeable supporting member/PTFE porous membrane C/air-permeable supporting member" was obtained in the same manner as in Example 1, except that the PTFE porous membrane C was used instead of the PTFE porous membrane A. The thickness of the air filter medium C was 320 μm, the pressure loss thereof was 220 Pa, the collection efficiency thereof was 99.9995%, and the PF value thereof was 24.

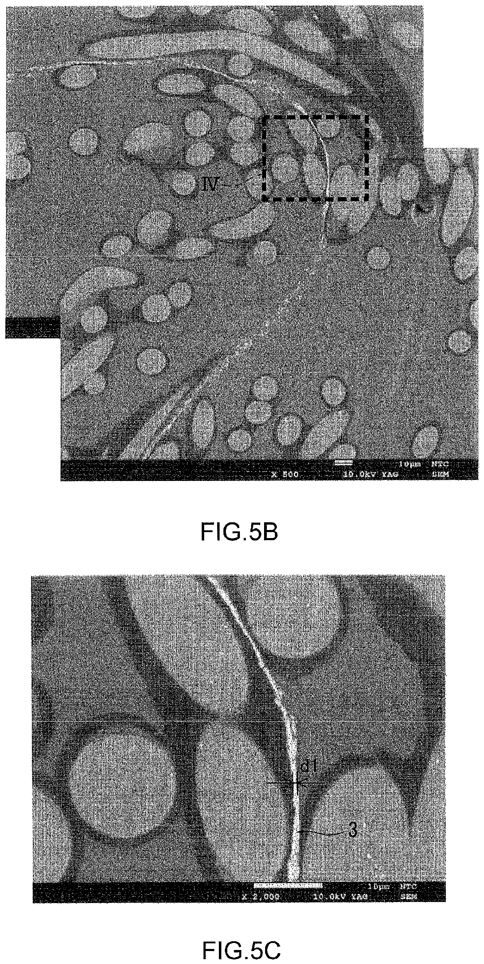

Next, a filter pleat pack C was obtained in the same manner as in Example 1, except that the air filter medium C was used instead of the air filter medium A. The PTFE porous membrane C in the filter pleat pack C had a thickness d1 of 1.0 μm and a thickness d2 of 10.0 μm, and the air filter medium had a shrinkage rate of 90%. FIG. 5A to FIG. 5C show enlarged images of a cross-section obtained as described above and subjected to image analysis to determine the thicknesses d1 and d2. FIG. 5A shows a portion of the PTFE porous membrane in a flat area. FIG. 5B shows a portion of the PTFE porous membrane in a folding area, and FIG. 5C shows an enlarged image of an area IV in FIG. 5B.

Next, the filter pleat pack C obtained by pleating was fixed to an aluminum frame having outer dimensions of 610 mm × 610 mm and including an opening portion having dimensions of 580 mm × 580 mm using an adhesive in such a manner that the four sides of the filter pleat pack was in close contact with the frame. An air filter unit was thus obtained. The overall collection efficiency of the air filter unit (the overall collection efficiency of the filter pleat pack C) was 99.99998% (6N8). The pressure loss of the filter pleat pack C was 100 Pa and the PF value thereof was 65.

(Comparative Example 1)

A PTFE porous membrane D was obtained in the same manner as in Example 1, except that the rolling was performed to obtain a rolled PTFE sheet having a thickness of 600 $\mu$m and the stretching ratio in the longitudinal direction was 25. The thickness of the PTFE porous membrane D was 5.0 $\mu$m.

Next, an air filter medium D having a three-layer structure composed of "air-permeable supporting member/PTFE porous membrane D/air-permeable supporting member" was obtained in the same manner as in Example 1, except that the PTFE porous membrane D was used instead of the PTFE porous membrane A. The thickness of the air filter medium D was 320 $\mu$m, the pressure loss thereof was 220 Pa, the collection efficiency thereof was 99.9995%, and the PF value thereof was 24.

Next, a filter pleat pack D was obtained in the same manner as in Example 1, except that the air filter medium D was used instead of the air filter medium A. The thickness d1 of the PTFE porous membrane D in the filter pleat pack D was 3.0 $\mu$m and the thickness d2 thereof was 5.0 $\mu$m, and the air filter medium had a shrinkage rate of 40%.

Next, the filter pleat pack D obtained by pleating was fixed to an aluminum frame having outer dimensions of 610 mm $\times$ 610 mm and including an opening portion having dimensions of 580 mm $\times$ 580 mm using an adhesive in such a manner that the four sides of the filter pleat pack was in close contact with the frame. An air filter unit was thus obtained. The overall collection efficiency of the air filter unit (the overall collection efficiency of the filter pleat pack D) was 99.9995% (5N5). The pressure loss of the filter pleat pack D was 100 Pa and the PF value thereof was 50.

The evaluation results are collectively shown in Table 1 below.

[Table 1]

| | Example 1 | Example 2 | Example 3 | Comparative Example 1 |
|---|---|---|---|---|
| Pressure loss of filter medium (Pa) | 220 | 220 | 220 | 220 |
| Collection efficiency of filter medium (%) | 99.9995 | 99.9995 | 99.9995 | 99.9995 |
| Thickness d1 of PTFE porous membrane ($\mu$m) | 3.0 | 1.0 | 1.0 | 3.0 |
| Thickness d2 of PTFE porous membrane ($\mu$m) | 7.0 | 6.7 | 10.0 | 5.0 |
| Shrinkage rate (%) | 57 | 85 | 90 | 40 |
| Collection efficiency of filter pleat pack (%) | 99.9998 (5N8) | 99.99993 (6N3) | 99.99998 (6N8) | 99.9995 (5N5) |
| PF value of filter pleat pack | 55 | 60 | 65 | 50 |

As shown in Table 1, the filter pleat packs of Examples having a shrinkage rate of 50% or more have improved collection efficiencies as filter pleat packs and air filter units including the filter pleat packs compared to the filter pleat pack of Comparative Example although the pressure losses and collection efficiencies as air filter mediums are at the same levels.

INDUSTRIAL APPLICABILITY

The filter pleat pack of the present invention can be used in the same applications as conventional filter pleat packs including air filter mediums. One of the applications is, for example, an air filter unit for clean rooms used in, for example, the semiconductor industry and the pharmaceutical industry.

**Claims**

1. A filter pleat pack comprising an air filter medium folded into pleats, wherein

the air filter medium comprises a laminate of a polytetrafluoroethylene (PTFE) porous membrane and an air-permeable supporting member, and
the air filter medium has a shrinkage rate of 50% or more, the shrinkage rate being determined by a formula (d2 - d1)/d2, where d1 is a smallest thickness of the PTFE porous membrane in a folding area of the air filter medium folded into pleats and d2 is a thickness of the PTFE porous membrane in a flat area of the air filter medium.

2. The filter pleat pack according to claim 1, wherein the thickness d1 is 1 $\mu$m or more.

3. The filter pleat pack according to claim 1 or 2, wherein the thickness d2 is more than 5 $\mu$m.

4. The filter pleat pack according to any one of claims 1 to 3, wherein the mass per unit area of the air filter medium is 30 to 260 g/m$^2$.

5. The filter pleat pack according to any one of claims 1 to 4, wherein

   the laminate comprises a plurality of the air-permeable supporting members, and
   principal surfaces of the filter medium are each formed of the air-permeable supporting member.

6. An air filter unit comprising:

   the filter pleat pack according to any one of claims 1 to 5; and
   a frame supporting the filter pleat pack.

FIG.1A

FIG.1B

FIG.2

FIG.3

FIG.4

FIG.5A

EP 3 903 903 A1

FIG.5B

FIG.5C

16

## INTERNATIONAL SEARCH REPORT

| International application No. |
| --- |
| PCT/JP2019/050445 |

A. CLASSIFICATION OF SUBJECT MATTER

Int.Cl. B01D39/16(2006.01)i, B01D63/14(2006.01)i, B01D69/00(2006.01)i,
B01D69/10(2006.01)i, B01D69/12(2006.01)i, B01D71/36(2006.01)i
FI: B01D39/16C, B01D69/10, B01D69/12, B01D69/00, B01D71/36, B01D63/14

According to International Patent Classification (IPC) or to both national classification and IPC

B. FIELDS SEARCHED

Minimum documentation searched (classification system followed by classification symbols)
Int.Cl. B01D39/16, B01D63/14, B01D69/00, B01D69/10, B01D69/12, B01D71/36

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2013-32514 A (NITTO DENKO CORPORATION) 14.02.2013 (2013-02-14), claims, examples, table 1, fig. 4 | 1-6 |
| X | JP 2005-177641 A (NITTO DENKO CORPORATION) 07.07.2005 (2005-07-07), claims, paragraph [0032], examples, fig. 1 | 1-6 |
| X | WO 2018/062112 A1 (NITTO DENKO CORPORATION) 05.04.2018 (2018-04-05), claims, paragraph [0034], examples, fig. 7A | 1-6 |
| X | JP 2017-64713 A (NITTO DENKO CORPORATION) 06.04.2017 (2017-04-06), claims, examples, table 1 | 1-6 |
| X | JP 2003-205211 A (NITTO DENKO CORPORATION) 22.07.2003 (2003-07-22), claims, paragraphs [0013], [0015], examples, fig. 3 | 1-6 |
| P, X | JP 2019-58903 A (NITTO DENKO CORPORATION) 18.04.2019 (2019-04-18), claims, paragraph [0033], examples, fig. 7 | 1-6 |

| ☐ Further documents are listed in the continuation of Box C. | ☒ See patent family annex. |
| --- | --- |

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>21.02.2020 | Date of mailing of the international search report<br>03.03.2020 |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

<table>
<tr><td colspan="2" align="center"><b>INTERNATIONAL SEARCH REPORT</b><br>Information on patent family members</td><td>International application No.<br>PCT/JP2019/050445</td></tr>
</table>

| | | |
|---|---|---|
| JP 2013-32514 A | 14.02.2013 | US 2014/0130470 A1<br>claims, examples,<br>table 1, fig. 4<br>WO 2013/005430 A1<br>EP 2730607 A1<br>TW 201306931 A<br>CN 103649189 A<br>KR 10-2014-0056232 A |
| JP 2005-177641 A | 07.07.2005 | (Family: none) |
| WO 2018/062112 A1 | 05.04.2018 | EP 3520874 A1<br>claims, paragraph [0034],<br>examples, fig. 7A<br>KR 10-2019-0056373 A<br>CN 109843410 A<br>TW 201813705 A |
| JP 2017-64713 A | 06.04.2017 | US 2018/0264392 A1<br>claims, examples,<br>table 1<br>EP 3357564 A1<br>TW 201731576 A<br>CA 2999397 A<br>KR 10-2018-0059806 A |
| JP 2003-205211 A | 22.07.2003 | US 2003/0094102 A1<br>claims, paragraphs [0024],<br>[0026], examples, fig. 3<br>EP 1310288 A1<br>KR 10-2003-0038528 A |
| JP 2019-58903 A | 18.04.2019 | WO 2019/059382 A1<br>TW 201919749 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001170461 A